# EUROPÄISCHE PATENTSCHRIFT

(11) **EP 1 417 118 B1**
(45) Veröffentlichungstag und Bekanntmachung des Hinweises auf die Patenterteilung: **02.11.2005**
(21) Anmeldenummer: 02760087.3
(22) Anmeldetag: 09.07.2002
(51) Int. Cl.: B60T 1/00

(54) **VERFAHREN ZUR ENTGASUNG EINER HYDRAULISCHEN FAHRZEUGBREMSANLAGE**
METHOD USED FOR BLEEDING A HYDRAULIC VEHICLE BRAKE SYSTEM
PROCEDE POUR DEGAZER UN SYSTEME DE FREINAGE HYDRAULIQUE DE VEHICULE

(30) Priorität: 03.08.2001 DE 10138125
(43) Veröffentlichungstag der Anmeldung: 12.05.2004
(73) Patentinhaber: ROBERT BOSCH GMBH, 70442 Stuttgart (DE)
(72) Erfinder: SCHMIDT, Guenther, 74366 Kirchheim (DE)
(86) Internationale Anmeldenummer: PCT/DE2002/002502
(87) Internationale Veröffentlichungsnummer: WO 2003/016114

(56) Entgegenhaltungen:
- EP-A- 0 159 127
- WO-A-02/42135
- WO-A-98/28174
- WO-A-99/52756
- DE-A- 3 935 353

## Beschreibung

### Stand der Technik

Die Erfindung betrifft ein Verfahren zur Entgasung einer hydraulischen Fahrzeugbremsanlage, die eine Fremdkraft-Betriebsbremsanlage und eine Muskelkraft-Hilfsbremsanlage aufweist, mit den Merkmalen des Oberbegriffs des Anspruchs 1.

Eine derartige Fahrzeugbremsanlage ist bekannt aus der WO 02/42135 A1. Die Fremdkraft-Betriebsbremsanlage der bekannten Fahrzeugbremsanlage weist eine Hydropumpe auf, die mit einem Elektromotor antreibbar ist und deren Saugseite an einen Bremsflüssigkeitsvorratsbehälter angeschlossen ist. An eine Druckseite der Hydropumpe ist ein Hydrospeicher angeschlossen. Der Elektromotor, die Hydropumpe und der Hydrospeicher bilden eine Fremdenergiequelle zur Betätigung der Fremdkraft-Betriebsbremsanlage. An die Druckseite der Hydropumpe und den Hydrospeicher, also an die Fremdenergiequelle, sind Radbremszylinder angeschlossen, wobei jeder Radbremszylinder ein Bremsdruckaufbauventil aufweist, das der Fremdenergiequelle und dem Radbremszylinder zwischengeschaltet ist. Über jeweils ein Bremsdruckabsenkventil sind die Radbremszylinder an den Bremsflüssigkeitsvorratsbehälter angeschlossen. Die Bremsdruckaufbauventile und die Bremsdruckabsenkventile bilden Bremsdrucksteuerventilanordnungen, mit denen sich ein Radbremsdruck in den Radbremszylindern radindividuell einstellen lässt. Auch eine Blockierschutz-, Antriebsschlupf- und/oder Fahrdynamikregelung lässt sich mit den Bremsdrucksteuerventilanordnungen durchführen. Dies ist an sich bekannt und soll an dieser Stelle nicht näher erläutert werden.

Für den Ausfall der Betriebsbremsanlage weist die bekannte Fahrzeugbremsanlage eine Muskelkraft-Hilfsbremsanlage auf. Diese umfasst einen Hauptbremszylinder, der mit Muskelkraft betätigbar ist. An den Hauptbremszylinder ist unter Zwischenschaltung eines Trennventils mindestens einer der Radbremszylinder der Fahrzeugbremsanlage angeschlossen. Bei Ausfall der Betiebsbremsanlage werden bzw. sind die Trennventile geöffnet und die Bremsdruckaufbau- und -absenkventile geschlossen. Dadurch ist die Fremdenergiequelle hydraulisch von der Muskelkraft-Hilfsbremsanlage getrennt und die an den Hauptbremszylinder angeschlossenen Radbremszylinder sind hydraulisch mit dem Hauptbremszylinder verbunden, so dass durch Betätigung des Hauptbremszylinders mit den an ihn angeschlossenen Radbremszylindern gebremst werden kann. Während einer Betriebsbremsung werden die Trennventile geschlossen, so dass der Hauptbremszylinder hydraulisch von der Fremdkraft-Betriebsbremsanlage getrennt und nicht von dieser mit Druck beaufschlagt wird. Die Betriebsbremsung ist oben dargelegt worden.

Bei Fremdkraft-Betriebsbremsanlagen, die eine Hydropumpe und einen Hydrospeicher als Fremdenergiequelle aufweisen, besteht die Möglichkeit, dass Gasblasen in der Bremsflüssigkeit auftreten, die zu einer unerwünschten Kompressibilität der Bremsflüssigkeit führen. Ist beispielsweise der Hydrospeicher als Gasdruckspeicher mit einer Membran ausgebildet, die ein Speichergas von der Bremsflüssigkeit trennt, so ist eine Diffusion von Speichergas durch die Membran in die Bremsflüssigkeit unvermeidbar. Das Gas ist zwar zunächst in der Bremsflüssigkeit gelöst, wird jedoch, wenn die eindiffundierte Gasmenge zunimmt und nicht mehr vollständig lösbar ist, außer Lösung gehen und ausperlen, also Gasblasen bilden. Auch bei einem Abfall des Drucks der Bremsflüssigkeit kann gelöstes Gas außer Lösung gehen, ausperlen und Gasblasen bilden. Dabei muss der Druckabfall keineswegs durch einen Fehler der Fahrzeugbremsanlage bedingt sein, auch betriebsübliche Druckschwankungen der Hydraulikflüssigkeit der Fahrzeugbremsanlage können zu einem Ausperlen von in der Bremsflüssigkeit gelöstem Gas führen. Auch bei einem einen Kolben aufweisenden Hydrospeicher ist mit einem Gaseintritt am Kolben vorbei in die Bremsflüssigkeit zu rechnen. Des weiteren kann die Hydropumpe Luft ansaugen und in die Bremsflüssigkeit einbringen.

Um Gasblasen in der Muskelkraft-Hilfsbremsanlage und den Radbremszylindern zu vermeiden, wird in der WO 02/42135 A1 vorgeschlagen bei geöffneten Trennventilen und bei in Durchlassstellung geschalteten Druckaufbauventilen die Hydropumpe anzusteuern, um Druckmittel in Leitungsabschnitte einzuspeisen und diese in Richtung zum Bremsflüssigkeitsvorratsbehälter hin zu durchspülen. Hinweise darauf, dass insbesondere die im Hydrospeicher gespeicherte Bremsflüssigkeit mit Gas belastet sein kann, da der Hydrospeicher über die Hydropumpe direkten Kontakt zum mit der Atmosphäre verbundenen Bremsflüssigkeitvorratsbehälter hat, enthält dieses Dokument nicht. Ausgehend von diesem bekannten Stand der Technik besteht die der Erfindung zugrundeliegende Aufgabe demnach darin, das bekannte Verfahren zur Entgasung einer hydraulischen Fahrzeugbremsanlage hinsichtlich seines Wirkungsgrads bei der Entgasung der Bremsflüssigkeit zu verbessern. Diese Aufgabe löst ein Verfahren mit den Merkmalen des Anspruchs 1.

Neben dem bereits erläuterten Stand der Technik ist aus dem Dokument WO 98/28174 A 1 ein Gegenstand bekannt, bei dem vor demselben technischen Hintergrund ZylinderKolben-Anordnungen für diejenigen Radbremszylinder vorgesehen sind, die an den Hauptbremszylinder angeschlossen sind.

Die Zylinder-Kolben-Anordnungen bilden Medientrenner, die die Bremsflüssigkeit der Fremdkraft-Betriebsbremsanlage von der Bremsflüssigkeit der Muskelkraft-Hilfsbremsanlage und der Radbremszylinder trennt. Dadurch wird verhindert, dass Gas aus der Bremsflüssigkeit der Fremdkraft-Betriebsbremsanlage in die Bremsflüssigkeit der Muskelkraft-Hilfsbremsanlage und die Radbremszylinder gelangt. Eine Kompressibilität der Bremsflüssigkeit durch Gasblasen in der Muskelkraft-Hilfsbremsanlage wird vermieden. Eine Kompressibilität der Bremsflüssigkeit der Muskelkraft-Hilfsbremsanlage würde deren Bremswirkung mindern oder die Hilfsbremsanlage außer Betrieb setzen. Gasblasen in der Bremsflüssigkeit in der Fremdkraft-Betriebsbremsanlage und eine dadurch bewirkte Kompressibilität der Bremsflüssigkeit werden bei der bekannten Fahrzeugbremsanlage in Kauf genommen, da die Hydropumpe und der Hydrospeicher eine ausreichende Bremsflüssigkeitsmenge zur Verfügung stellen, um trotz Kompressibilität der Bremsflüssigkeit einen ausreichenden Bremsflüssigkeitsdruck in den Radbremszylindern aufzubauen.

### Vorteile der Erfindung

Zur Entgasung einer hydraulischen, eine Fremdkraft-Betriebsbremsanlage und eine Muskelkraft-Hilfsbremsanlage aufweisenden Fahrzeugbremsanlage schlägt die Erfindung vor, das oder die Bremsdruckaufbauventile eines oder mehrerer Radbremszylinder und das dem Hauptbremszylinder und den Radbremszylindern zwischengeschaltete Trennventil zu öffnen und die Bremsdruckabsenkventile zu schließen oder geschlossen zu halten. Unter Entgasung ist das Entfernen von Bremsflüssigkeit, die Gasblasen aufweisen kann, aus der Fahrzeugbremsanlage und der Ersatz durch gasblasenfreie Bremsflüssigkeit gemeint. Bremsflüssigkeit aus dem unter Druck stehenden Hydrospeicher strömt durch die offenen Bremsdruckaufbauventile, durch das offene Trennventil und durch den Hauptbremszylinder in den Bremsflüssigkeitsvorratsbehälter, in dem Gasblasen aus der Bremsflüssigkeit austreten können. Auf diese Weise wird Bremsflüssigkeit, die Gasblasen aufweisen kann, aus der Fahrzeugbremsanlage in den Bremsflüssigkeitsvorratsbehälter verdrängt und durch Bremsflüssigkeit aus dem Hydrospeicher ersetzt wobei der Hydrospeicher geleert wird. Dadurch werden Gasblasen und insbesondere eine Ansammlung von Gasblasen in der Fahrzeugbremsanlage vermieden. Außer dem Vorteil der Entgasung der Bremsflüssigkeit in der Fahrzeugbremsanlage hat das erfindungsgemäße Verfahren den weiteren Vorteil, dass auf Medientrenner verzichtet werden kann.

Die Unteransprüche haben vorteilhafte Ausgestaltungen und Weiterbildungen der im Anspruch 1 angegebenen Erfindung zum Gegenstand.

Gemäß Anspruch 2 wird die Hydropumpe zur Entgasung eingeschaltet. Sie fördert Bremsflüssigkeit aus dem Bremsflüssigkeitsvorratsbehälter durch die offenen Bremsdruckaufbauventile, das offene Trennventil und den Hauptbremszylinder zurück in den Bremsflüssigkeitsvorratsbehälter. Die Fahrzeugbremsanlage einschließlich ihrer Bremsdruckaufbauventile, der Trennventile und des Hauptbremszylinders wird dadurch mit Bremsflüssigkeit "durchgespült", wobei in der Bremsflüssigkeit enthaltene Gasblasen im Bremsflüssigkeitsvorratsbehälter austreten. Es kann auch vor Einschalten der Hydropumpe der Hydrospeicher durch Öffnen der Bremsdruckaufbauventile und des Trennventils entleert werden, bevor die Hydropumpe eingeschaltet wird, damit die Bremsflüssigkeit aus dem Hydrospeicher, die Gasblasen enthalten kann, in den Bremsflüssigkeitsvorratsbehälter gelangt, wo die Gasblasen austreten können. Der Entgasungsvorgang kann mehrfach wiederholt werden.

Anspruch 3 sieht eine radweise Entgasung der Fahrzeugbremsanlage vor, in dem jeweils nur ein Bremsdruckaufbauventil und das zugeordnete Trennventil geöffnet werden. Es werden also die einem Fahrzeugrad zugeordneten Teile der Fahrzeugbremsanlage einzeln entgast. Dies stellt eine zuverlässige Entgasung jedes einem Radbremszylinder zugeordneten Teils der Fahrzeugbremsanlage sicher, wogegen bei einem gleichzeitigen Öffnen mehrerer Bremsdruckaufbauventile die den Radbremszylindern zugeordneten Teile der Fahrzeugbremsanlage unterschiedlich gut durchgespült werden können.

Anspruch 4 sieht vor, zur Entgasung die Bremsdruckaufbauventile und anstelle der Trennventile die Bremsdruckabsenkventile zu öffnen, die Trennventile werden geschlossen. Bremsflüssigkeit aus dem Hydrospeicher und/oder der Hydropumpe strömt in diesem Fall durch die Bremsdruckaufbauventile und die Bremsdruckabsenkventile in den Bremsflüssigkeitsvorratsbehälter, wo Gasblasen austreten können. Der Hauptbremszylinder wird bei dieser Ausgestaltung der Erfindung bei der Entgasung nicht durchgespült, es wird allerdings auch vermieden, dass Bremsflüssigkeit, die Gasblasen enthalten kann, aus der Fahrzeugbremsanlage in den Hauptbremszylinder gelangt.

Um nicht in den Bremsbetrieb einzugreifen sieht Anspruch 7 vor, die Entgasung nur bei stehendem Fahrzeug vorzunehmen, was mit Raddrehsensoren, die bei modernen, eine Schlupfregeleinrichtung aufweisenden Fahrzeugbremsanlagen vorhanden sind, unschwer feststellbar ist.

Ein Beispiel, das das Verständnis der Erfindung erleichtert, ist auf einen speziell zur Durchführung des erfindungsgemäßen Entgasungs-Verfahrens ausgebildeten Hauptbremszylinder gerichtet. Ein radbremszylinderseitiger Anschluss des Hauptbremszylinders mündet in etwa tangential in eine Zylinderbohrung des Hauptbremszylinders. Dies hat folgenden Zweck: Beim Spülen der Fahrzeugbremsanlage zur Entgasung strömt Bremsflüssigkeit bei offenem Trennventil durch den radbremszylinderseitigen Anschluss in den Hauptbremszylinder ein und an anderer Stelle, an der der Hauptbremszylinder an den Bremsflüssigkeitsvorratsbehälter angeschlossen ist, aus. Durch die in etwa tangentiale Ausrichtung des radbremszylinderseitigen Anschlusses strömt die Bremsflüssigkeit in etwa tangential in den Hauptbremszylinder ein, es stellt sich eine schraubenförmige Strömung entlang einer Wandung der Zylinderbohrung in Richtung des bremsflüssigkeitsvorratsseitigen Anschlusses des Hauptbremszylinders ein, an dem der Bremsflüssigkeitsvorratsbehälter angeschlossen ist. Durch die Strömung entlang der Zylinderwandung werden an der Wand haftende Gasblasen abgelöst und mit der Strömung aus dem Hauptbremszylinder heraus gefördert. Eine sonst im Lauf der Zeit größer werdende Ansammlung von Gasblasen im Hauptbremszylinder wird dadurch vermieden.

### Zeichnung

Die Erfindung wird nachfolgend anhand eines in der Zeichnung dargestellten Ausführungsbeispiels näher erläutert. Es zeigen:
- Fig.1: einen hydraulischen Schaltplan einer hydraulischen Fahrzeugbremsanlage zur Durchführung des erfindungsgemäßen Verfahrens; und
- Fig. 2: einen Querschnitt eines Hauptbremszylinders der Fahrzeugbremsanlage aus Figur 1.

### Beschreibung des Ausführungsbeispiels

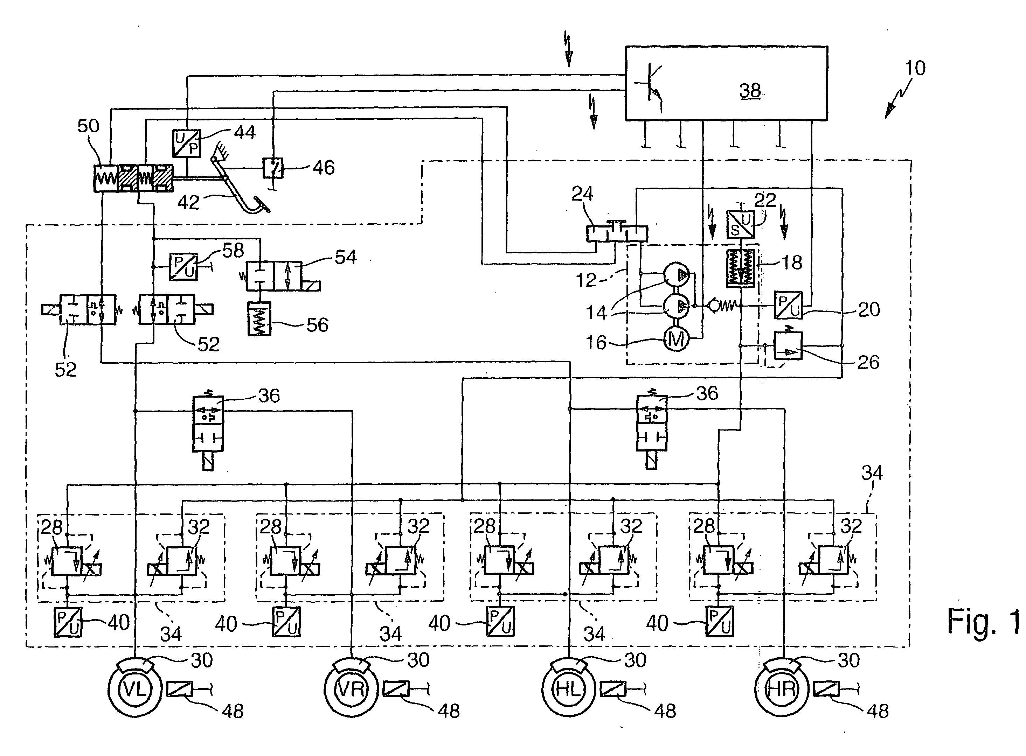

Die in Figur 1 dargestellte, erfindungsgemäße, hydraulische Fahrzeugbremsanlage 10 weist eine Fremdkraft-Betriebsbremsanlage und eine Muskelkraft-Hilfsbremsanlage auf, es handelt sich somit um eine sog. elektrohydraulische Fahrzeugbremsanlage mit Muskelkraft-Hilfsbremsanlage.

Als Fremdenergiequelle 12 weist die Fahrzeugbremsanlage 10 zwei hydraulisch parallel geschaltete Hydropumpen 14 auf, die mit einem gemeinsamen Elektromotor 16 antreibbar sind. An eine Druckseite der Hydropumpen 14 ist ein Hochdruck-Hydrospeicher 18 angeschlossen, der Bestandteil der Fremdenergiequelle 12 ist. Der Hydrospeicher 18 kann beispielsweise als ein eine Membran aufweisender Gasdruckspeicher, als gasdruck- oder federbeaufschlagter Metall-Faltenbalgspeicher oder als federbeaufschlagter Kolbenspeicher ausgebildet sein. An den Hydrospeicher 18 sind ein Drucksensor 20 und ein Wegsensor 22 angeschlossen. Eine Saugseite der Hydropumpen 14 ist an einen Bremsflüssigkeitsvorratsbehälter 24 angeschlossen. Ein Druckbegrenzungsventil 26 verbindet die Druckseite mit der Saugseite der Hydropumpen 14.

An die Fremdenergiequelle 12 sind, unter Zwischenschaltung von Druckaufbauventilen 28, Radbremszylinder 30 angeschlossen. Die Radbremszylinder 30 sind einander hydraulisch parallel geschaltet, es ist jedem Radbremszylinder 30 ein eigenes Druckaufbauventil 28 zugeordnet. Des weiteren ist jedem Radbremszylinder 30 ein Bremsdruckabsenkventil 32 zugeordnet, über das die Radbremszylinder 30 an den Bremsflüssigkeitsvorratsbehälter 24 angeschlossen sind. Das einem Radbremszylinder 30 zugeordnete Bremsdruckaufbauventil 28 und das dem gleichen Radbremszylinder 30 zugeordnete Bremsdruckabsenkventil 32 bilden eine Bremsdrucksteuerventilanordnung 34. Im dargestellten und beschriebenen Ausführungsbeispiel der Fahrzeugbremsanlage 10 sind die Bremsdruckaufbauventile 28 und die Bremsdruckabsenkventile 32 als Proportional-Druckbegrenzungsventile ausgebildet, die mit einem Proportional-Elektromagneten betätigbar sind. Es ist bekannt und möglich, die beiden einem Radbremszylinder 30 zugeordneten Druckbegrenzungsventile 28, 30 durch zwei 2/2-Wege-Magnetventile oder durch ein 3/3-Wege-Magnetventil zu ersetzen.

Einer Fahrzeugachse zugeordnete Radbremszylinder 30 sind mit einem Bremsdruckausgleichsventil 36 verbunden, das für eine radindividuelle Bremsdruckregelung, insbesondere zur Blockierschutz- oder Schlupfregelung schließbar ist. Die Bremsdruckausgleichsventile 36 sind als 2/2-Wege-Magnetventile ausgebildet, sie sind in ihrer stromlosen Grundstellung offen.

Zur Steuerung bzw. Regelung weist die Fahrzeugbremsanlage 10 ein elektronisches Steuergerät 38 auf, das Signale u.a. vom Drucksensor 20 und vom Wegsensor 22 des Hydrospeichers 18 und von an die Radbremszylinder 30 angeschlossenen Drucksensoren 40 erhält und das u.a. den Elektromotor 16 der Hydropumpen 14 und sämtliche Magnetventile 28, 32, 36 der Fahrzeugbremsanlage 10 steuert. Als Bremskraft- bzw. Bremsdruck-Sollwertgeber weist die Fahrzeugbremsanlage 10 ein Bremspedal 42 auf, an das ein Pedalwegsensor 44 angeschlossen ist. Des weiteren ist ein Bremslichtschalter 46 an das Bremspedal 42 angeschlossen, mit dem feststellbar ist, ob das Bremspedal 42 betätigt ist. Mit den beiden Hydropumpen 14 wird, unabhängig von einer Betätigung des Bremspedals 42, stets ein zum Bremsen ausreichender Mindestdruck im Hydrospeicher 18 aufrecht erhalten. Wird das Bremspedal 42 betätigt, wird abhängig von einer Stellung des Bremspedals 42 mit den die Bremsdruckaufbauventile 28 und die Bremsdruckabsenkventile 32 umfassenden Bremsdrucksteuerventilanordnungen 34 ein Radremsdruck in den Radbremszylindern 30 eingestellt. Dies ist an sich bekannt und soll hier nicht weiter vertieft werden. Solange die Ausgleichsventile 36 geöffnet sind, ist der Radbremsdruck in den Radbremszylindern 30 einer Fahrzeugachse gleich, eine achsindividuelle Bremsdruckregelung ist möglich und vorgesehen. Für eine radindividuelle Bremsdruckregelung werden die Ausgleichsventile 36 geschlossen. Dies ist insbesondere für eine Blockierschutz-, Antriebsschlupf- und/oder Fahrdynamikregelung notwendig. Auch diese Regelungen mittels der Bremsdrucksteuerventilanordnungen 34 sind an sich bekannt und sollen deswegen nicht weiter vertieft werden. Für die Blockierschutz-, Antriebsschlupf- und/oder Fahrdynamikregelung ist jedem Fahrzeugrad ein Raddrehsensor 48 zugeordnet, deren Signale dem elektronischen Steuergerät 38 zugeleitet und von diesem als Regeleingangsgrößen verarbeitet werden.

Die Fremdenergiequelle 12, die Bremsdruckaufbauventile 28, die Bremsdruckabsenkventile 32 und die Radbremszylinder 30 bilden die Fremdkraft-Betriebsbremsanlage der hydraulischen Fahrzeugbremsanlage 10.

Zur Muskelkraft-Hilfsbremsung im Falle eines Ausfalls der Betriebsbremsanlage weist die Fahrzeugbremsanlage 10 einen Hauptbremszylinder 50 auf, der mit dem Bremspedal 42 betätigt wird. Der Hauptbremszylinder 50 ist als Zweikreis-Hauptbremszylinder 50 ausgebildet, an den hydraulisch voneinander getrennt und unter Zwischenschaltung je eines Trennventils 52 die Radbremszylinder 30 angeschlossen sind. Im dargestellten Ausführungsbeispiel bilden die der Vorderachse zugeordneten Radbremszylinder 30 einen und die der Hinterachse zugeordneten Radbremszylinder 30 einen anderen Bremskreis. Eine andere Bremskreiszuordnung der Radbremszylinder 30 ist möglich. Die Trennventile 52 sind als in ihrer Grundstellung offene 2/2-Wege-Magnetventile ausgebildet. Zur Fremdkraftbremsung werden die Trennventile 52 geschlossen und dadurch der Hauptbremszylinder 50 hydraulisch von den Radbremszylindern 30 getrennt.

An einen Bremskreis des Hauptbremszylinders 50 ist unter Zwischenschaltung eines Simulatorventils 54 ein sog. Pedalwegsimulator 56 angeschlossen. Das Simulatorventil 54 ist ein in seiner stromlosen Grundstellung geschlossenes 2/2-Wege-Magnetventil. Zur Fremdkraftbremsung wird, bei geschlossenen Trennventilen 22, das Simulatorventil 54 geöffnet und dadurch der Pedalwegsimulator 56 hydraulisch mit dem Hauptbremszylinder 50 verbunden. Der Pedalwegsimulator 56 ist ein beispielsweise feder- oder gasdruckbeaufschlagter Hydrospeicher, in den Bremsflüssigkeit aus dem Hauptbremszylinder 50 verdrängbar ist. Der Pedalwegsimulator 56 ermöglicht bei geschlossenen Trennventilen 52 einen Weg des Bremspedals 42 mit einem Pedalkraftanstieg, der einem Pedalkraftanstieg, wie er von muskelkraftbetätigten Fahrzeugbremsanlagen gewohnt ist, zumindest ähnlich ist. Zur Redundanz ist ein Drucksensor 58 an einen Bremskreis des Hauptbremszylinders 50 angeschlossen, dessen Signal als Sollwert für die in den Radbremszylindern 30 aufzubauenden Radbremsdrücke anstelle des Pedalswegs verwendet werden kann.

Der Hauptbremszylinder 50 und die an ihn angeschlossenen Radbremszylinder 30 bilden die Muskelkraft-Hilfsbremsanlage der Fahrzeugbremsanlage 10.

Durch die Hydropumpen 14 und/oder den Hydrospeicher 18 der Fremdenergiequelle 12 können Luft und/oder Druckgas aus dem Hydrospeicher 18 in die Bremsflüssigkeit gelangen. Die Luft oder das Druckgas, nachfolgend zusammenfassend als Gas bezeichnet, kann in der Bremsflüssigkeit gelöst oder auch in Form von Gasbläschen enthalten sein. Durch Druckwechsel oder Anreicherung kann in der Bremsflüssigkeit gelöstes Gas ebenfalls Gasbläschen bilden. Die Bremsflüssigkeit wird dadurch kompressibel. Diese Kompressibilität ist zwar mittels der Fremdenergiequelle 12 ausgleichbar, die Funktion der Muskelkraft-Hilfsbremsanlage ist durch eine Kompressibilität der Bremsflüssigkeit zumindest vermindert. Um Gasbläschen in der Bremsflüssigkeit zu vermeiden oder aus der Bremsflüssigkeit zu entfernen, also zum Entgasen der Bremsflüssigkeit, ist das nachfolgend beschriebene, erfindungsgemäße Verfahren vorgesehen:

Zur Entgasung werden die Bremsdruckaufbauventile 28 geöffnet. Unter Druck stehende Bremsflüssigkeit aus dem Hydrospeicher 18 der Fremdenergiequelle 12 strömt durch die Bremsdruckaufbauventile 28, die offenen Trennventile 52 und den Hauptbremszylinder 50 in den Bremsflüssigkeitsvorratsbehälter 24, wo Gasblasen aus der Bremsflüssigkeit austreten können. Vorzugsweise wird das Verfahren Radbremse per Radbremse durchgeführt. Es wird also jeder Radbremszylinder 30 einzeln entlüftet, d. h. es wird stets nur ein Bremsdruckaufbauventil 28 geöffnet. Die Entgasung wird vorzugsweise nur bei stehendem Fahrzeug, feststellbar mittels der Raddrehsensoren 48, und bei nicht betätigtem Bremspedal 42, feststellbar mittels des Bremslichtschalters 46, durchgeführt. Dies ist sehr wichtig, da die Fahrzeugbremsanlage 10 während der Entgasung nicht bremsbereit ist. Sofern eine nahezu verzögerungsfreie Bremsung während der Entgasung einleitbar ist, wäre eine Entgasung auch während der Fahrt denkbar.

Zur Entgasung können die Hydropumpen 14 eingeschaltet sein oder werden. Auch ist es möglich, zunächst eine Entleerung des Hydrospeichers 18 abzuwarten, damit eventuell Gas enthaltende Bremsflüssigkeit aus dem Hydrospeicher 18 möglichst vollständig austritt. Durch Einschalten der Hydropumpen 14 wird der Hydrospeicher 18 anschließend wieder druckbeaufschlagt/mit Bremsflüssigkeit gefüllt. Dies kann mehrmals wiederholt werden, um eine möglichst vollständige Entfernung von Bremsflüssigkeit, die Gas enthalten kann, aus dem Hydrospeicher 18 zu erreichen. Eine abschließende Druckbeaufschlagung/Befüllung des Hydrospeichers 18 mit Bremsflüssigkeit erfolgt unmittelbar nach einer letzten Entleerung des Hydrospeichers 18, damit die Fahrzeugbremsanlage 10 bremsbereit ist oder schnellstmöglich wird.

Das ggf. wiederholte Entleeren des Hydrospeichers 18 kann auch durch Öffnen mindestens eines der Bremsdruckaufbauventile 28 und Öffnen des zugeordneten Bremsdruckabsenkventils 32 bei geschlossenen Trennventilen 52 direkt in den Bremsflüssigkeitsvorratsbehälter 24 erfolgen. Dadurch wird verhindert, dass Gas enthaltende Bremsflüssigkeit aus dem Hydrospeicher 18 in Richtung des Hauptbremszylinders 50 strömt.

Um eventuell Gas enthaltende Bremsflüssigkeit aus den Bremsdruckabsenkventilen 32 zu entfernen, können diese, während der Entgasung, gemeinsam mit dem jeweils zugeordneten Bremsdruckaufbauventil 28 geöffnet werden, so dass Bremsflüssigkeit aus der Fremdenergiequelle 12 auch die Bremsdruckabsenkventile 32 durchströmt. Auch die Entgasung der Bremsdruckabsenkventile 32 kann radweise erfolgen. Die Trennventile 52 werden zur Entgasung der Bremsdruckabsenkventile 32 vorzugsweise geschlossen, die Ausgleichsventile 36 können geschlossen werden. Werden zur Entgasung die Bremsdruckaufbauventile 28 und die Bremsdruckabsenkventile 32 geöffnet und die Trennventile 52 geschlossen, durchströmt die Bremsflüssigkeit nicht den Hauptbremszylinder 50, sondern gelangt aus den Bremsdruckabsenkventilen 32 direkt in den Bremsflüssigkeitsvorratsbehälter 24. Dies hat den Vorteil, dass ein Eintritt von Gasblasen in den Hauptbremszylinder 50 vermieden wird.

Zur Entgasung der Ausgleichsventile 36 werden diese sowie jeweils ein mit dem Ausgleichsventil 36 verbundenes Bremsdruckaufbauventil 28 und ein mit dem Ausgleichsventil 36 verbundenes Bremsdruckabsenkventil 32, das einem anderen Radbremszylinder 30 als das Bremsdruckaufbauventil 28 zugeordnet ist, geöffnet. Die Trennventile 52 werden vorzugsweise geschlossen. Bremsflüssigkeit aus der Fremdenergiequelle 12 strömt durch das geöffnete Bremsdruckaufbauventil 28, das offene Ausgleichsventil 36 und das geöffnete Bremsdruckabsenkventil 32 in den Bremsflüssigkeitsvorratsbehälter 24.

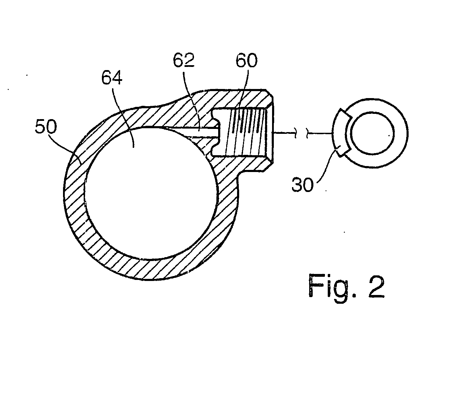

Figur 2, die das Verständnis der Erfindungerleichtert, zeigt einen Querschnitt des Hauptbremszylinders 50 im Bereich eines radbremszylinderseitigen Anschlusses 60. Zur Verdeutlichung ist einer der Radbremszylinder 30 symbolisch dargestellt, allerdings ohne das zwischengeschaltete Trennventil 52. Wie in der Zeichnung zu sehen, mündet eine Bohrung 62 des Anschlusses 60 tangential in eine Zylinderbohrung 64 des Hauptbremszylinders 50. Die tangentiale Anordnung der Bohrung 62 des radbremszylinderseitigen Anschlusses 60 in die Zylinderbohrung 64 des Hauptbremszylinders 50 hat folgenden Zweck: Bei der erfindungsgemäßen Entgasung, die oben erläutert worden ist, strömt Bremsflüssigkeit aus Richtung der Radbremszylinder 30 durch den Anschluss 60 in die Zylinderbohrung 64 des Hauptbremszylinders 50. Der Austritt der Bremsflüssigkeit erfolgt an anderer, in Figur 2 nicht sichtbarer Stelle, beispielsweise durch ein Zentralventil in einem Kolben des Hauptbremszylinders 50 oder durch eine Schnüffelbohrung, die mit axialem Abstand von der Bohrung 62 des radbremszylinderseitigen Anschlusses 60 in einer Zylinderwand des Hauptbremszylinders 50 angebracht ist. Durch die tangentiale Anordnung der Bohrung 62 des radbremszylinderseitigen Anschlusses 60 strömt die Bremsflüssigkeit bei der Entgasung in Umfangsrichtung an der Innenseite der Zylinderwand des Hauptbremszylinders 50 entlang, es bildet sich eine schraubenlinienförmige Strömung in der Zylinderbohrung 64 entlang der Zylinderwand aus. Die Strömung entlang der Zylinderwand löst Gasbläschen, die sich eventuell an der Innenseite der Zylinderwand des Hauptbremszylinders 50 abgesetzt haben, von der Zylinderwand. Die schraubenlinienförmig durch die Zylinderbohrung 64 strömende Bremsflüssigkeit nimmt die Gasbläschen mit und fördert sie dadurch aus dem Hauptbremszylinder 50 heraus in Richtung des Bremsflüssigkeitsvorratsbehälters 24 (Figur 1), wo die Gasbläschen aus der Bremsflüssigkeit austreten können. Dadurch wird eine Entgasung des Hauptbremszylinders 50, also eine Entfernung eventuell im Hauptbremszylinder 50 befindlicher Gasbläschen aus dem Hauptbremszylinder 50, erreicht. Der Hauptbremszylinder 50 ist speziell für das beschriebene Verfahren zur Entgasung einer hydraulischen Fahrzeugbremsanlage 10 geeignet.

## Patentansprüche

1. Verfahren zur Entgasung einer hydraulischen Fahrzeugbremsanlage (10), die eine Fremdkraft-Betriebsbremsanlage und eine Muskelkraft-Hilfsbremsanlage aufweist, wobei die Fremdkraft-Betriebsbremsanlage eine Hydropumpe (14) aufweist, deren Saugseite an einen Bremsflüssigkeitsvorratsbehälter (24) angeschlossen ist und an deren Druckseite ein Hydrospeicher (18) und unter Zwischenschaltung eines Bremsdruckaufbauventils (28) mindestens ein Radbremszylinder (30) angeschlossen ist, wobei der Radbremszylinder (30) über ein Bremsdruckabsenkventil (32) an den Bremsflüssigkeitsvorratsbehälter (24) angeschlossen ist und wobei die Muskelkraft-Hilfsbremsanlage einen mit Muskelkraft betätigbaren Hauptbremszylinder (50) aufweist, der an den Bremsflüssigkeitsvorratsbehälter (24) angeschlossen ist und an den unter Zwischenschaltung eines Trennventils (52) der Radbremszylinder (30) angeschlossen ist, wobei zur Entgasung der Fahrzeugbremsanlage (10) das Bremsdruckaufbauventil (28) und das Trennventil (52) geöffnet und das Bremsdruckabsenkventil (32) geschlossen werden, **dadurch gekennzeichnet, dass** zur Entgasung der Hydrospeicher (18) entleert wird.

2. Verfahren zur Entgasung einer hydraulischen Fahrzeugbremsanlage nach Anspruch 1, **dadurch gekennzeichnet, dass** zur Entgasung die Hydropumpe (14) eingeschaltet wird.

3. Verfahren zur Entgasung einer hydraulischen Fahrzeugbremsanlage nach Anspruch 1, **dadurch gekennzeichnet, dass** die Fahrzeugbremsanlage (10) mehrere Radbremszylinder (30) mit jeweils zugeordneten Bremsdruckaufbauventilen (28) und Bremsdruckabsenkventilen (34) aufweist, wobei die Bremsdruckaufbauventile (28) an die Druckseite der Hydropumpe (14) und an den Hydrospeicher (18) und die Bremsdruckabsenkventile (32) an den Bremsflüssigkeitsvorratsbehälter angeschlossen sind, und wobei mindestens ein Radbremszylinder (30) unter Zwischenschaltung eines Trennventils (52) an den Hauptbremszylinder (50) angeschlossen ist, und dass die Entgasung radweise erfolgt, wobei das Bremsdruckaufbauventil (28) eines Radbremszylinders (30) geöffnet und das Bremsdruckaufbauventil (28) und/oder das Bremsdruckabsenkventil (32) der anderen Radbremszylinder (30) geschlossen werden.

4. Verfahren zur Entgasung einer hydraulischen Fahrzeugbremsanlage nach Anspruch 3, **dadurch gekennzeichnet, dass** zur Entgasung eines unter Zwischenschaltung des Trennventils (52) an dem Hauptbremszylinder (50) angeschlossenen Radbremszylinders (30) das Trennventil (52) anstelle des Bremsdruckabsenkventils (32) geöffnet wird.

5. Verfahren zur Entgasung einer hydraulischen Fahrzeugbremsanlage nach Anspruch 1, **dadurch gekennzeichnet, dass** zur Entgasung der Fahrzeugbremsanlage (10) das Bremsdruckaufbauventil (28) und das Bremsdruckabsenkventile (32) geöffnet und das Trennventil (52) geschlossen werden.

6. Verfahren zur Entgasung einer hydraulischen Fahrzeugbremsanlage nach Anspruch 5, **dadurch gekennzeichnet, dass** der Hydrospeicher (18) nach seiner Entleerung mit der Hydropumpe (14) wieder befüllt und anschließend wieder entleert wird.

7. Verfahren zur Entgasung einer hydraulischen Fahrzeugbremsanlage nach Anspruch 1, **dadurch gekennzeichnet, dass** die Entgasung bei stehendem Fahrzeug durchgeführt wird.

## Claims

1. Method for degassing a hydraulic vehicle brake system (10) which has an externally powered service brake system and a muscular-power auxiliary brake system, the externally powered service brake system having a hydraulic pump (14), the suction side of which is connected to a brake-fluid reservoir (24) and to the delivery side of which are connected a hydraulic accumulator (18) and, with a brake-pressure build-up valve (28) interposed, at least one wheel-brake cylinder (30), the wheel-brake cylinder (30) being connected to the brake-fluid reservoir (24) via a brake-pressure lowering valve (32), and the muscular-power auxiliary brake system having a brake master cylinder (50) which is actuable by muscular power and is connected to the brake-fluid reservoir (24) and to which is connected, with an isolating valve (52) interposed, the wheel-brake cylinder (30), for degassing the vehicle brake system (10) the brake-pressure build-up valve (28) and the isolating valve (52) being opened and the brake-pressure lowering valve (32) being closed, **characterized in that**, for degassing, the hydraulic accumulator (18) is emptied.

2. Method for degassing a hydraulic vehicle brake system according to Claim 1, **characterized in that**, for degassing, the hydraulic pump (14) is switched on.

3. Method for degassing a hydraulic vehicle brake system according to Claim 1, **characterized in that** the vehicle brake system (10) has a plurality of wheel-brake cylinders (30) in each case with assigned brake-pressure build-up valves (28) and with brake-pressure lowering valves (34), the brake-pressure build-up valves (28) being connected to the delivery side of the hydraulic pump (14) and to the hydraulic accumulator (18), and the brake-pressure lowering valve (32) being connected to the brake-fluid reservoir, and at least one wheel-brake cylinder (30) being connected to the brake master cylinder (50), with an isolating valve (52) interposed, and **in that** degassing takes place wheel by wheel, the brake-pressure build-up valve (28) of one wheel-brake cylinder (30) being opened, and the brake-pressure build-up valve (28) and/or the brake-pressure lowering valve (32) of the other wheel-brake cylinders (30) being closed.

4. Method for degassing a hydraulic vehicle brake system according to Claim 3, **characterized in that**, for degassing a wheel-brake cylinder (30) connected to the brake master cylinder (50), with the isolating valve (52) interposed, the isolating valve (52) is opened instead of the brake-pressure lowering valve (32).

5. Method for degassing a hydraulic vehicle brake system according to Claim 1, **characterized in that**, for degassing the vehicle brake system (10), the brake-pressure build-up valve (28) and the brake-pressure lowering valve (32) are opened and the isolating valve (52) is closed.

6. Method for degassing a hydraulic vehicle brake system according to Claim 5, **characterized in that** the hydraulic accumulator (18), after being emptied, is filled again by means of the hydraulic pump (14) and is subsequently emptied again.

7. Method for degassing a hydraulic vehicle brake system according to Claim 1, **characterized in that** degassing is carried out with the vehicle at a standstill.

## Revendications

1. Procédé pour dégazer un système de freinage hydraulique de véhicule (10) qui présente un système de freinage de service actionné par une force extérieure et un système de freinage auxiliaire actionné par la force musculaire, le système de freinage de service actionné par une force extérieure comportant une pompe hydraulique (14) dont le côté d'aspiration est raccordé à un réservoir de stockage de liquide de frein (24) et dont le côté pression est raccordé à un accumulateur hydraulique (18) ainsi qu'à au moins un cylindre de frein de roue (30) en intercalant une soupape de montée de pression de freinage (28), le cylindre de frein de roue (30) étant raccordé au réservoir de stockage de liquide de frein (24) via une soupape de baisse de pression de freinage (32) et le système de freinage auxiliaire actionné par la force musculaire présentant un cylindre de freinage principal (50) pouvant être actionné par la force musculaire, raccordé au réservoir de stockage de liquide de frein (24) et auquel est raccordé le cylindre de frein monté sur roue (30) en intercalant une soupape de séparation (52), la soupape de montée de pression de freinage (28) et la soupape de séparation (52) étant ouvertes pour dégazer le système de freinage du véhicule (10) et la soupape de baisse de pression de freinage (32) étant fermée,
**caractérisé en ce qu'**
on vide l'accumulateur hydraulique (18) pour le dégazage.

2. Procédé pour dégazer un système de freinage hydraulique de véhicule selon la revendication 1,
**caractérisé en ce qu'**
on actionne la pompe hydraulique (14) pour le dégazage.

3. Procédé pour dégazer un système de freinage hydraulique de véhicule selon la revendication 1,
**caractérisé en ce que**
le système de freinage hydraulique (10) présente plusieurs cylindres de frein de roue (30) avec des soupapes de montée de pression de freinage (28) et des soupapes de baisse de pression de freinage (34) respectivement associées, les soupapes de montée de pression de freinage (28) étant raccordées au côté pression de la pompe hydraulique (14) et à l'accumulateur hydraulique (18) et les soupapes de baisse de pression de freinage (32) étant raccordées au réservoir de stockage de liquide de frein et au moins un cylindre de frein de roue (30) étant raccordé au cylindre de frein principal (50) en intercalant une soupape de séparation (52), et le dégazage se fait par roue, en ouvrant la soupape de montée de pression de freinage (28) d'un cylindre de frein de roue (30) et en fermant la soupape de montée de pression de freinage (28) et/ou la soupape de baisse de pression (32) de l'autre cylindre de frein de roue (30).

4. Procédé pour dégazer un système de freinage hydraulique de véhicule selon la revendication 3,
**caractérisé en ce que**
pour dégazer un cylindre de frein de roue (30) raccordé au cylindre de frein principal (50) avec interposition de la soupape de séparation (52), on ouvre la soupape de séparation (52) à la place de la soupape de baisse de pression de freinage (32).

5. Procédé pour dégazer un système de freinage hydraulique de véhicule selon la revendication 1,
**caractérisé en ce que**
pour dégazer le système de freinage de véhicule (10), on ouvre la soupape de montée de pression de freinage (28) et la soupape de baisse de pression de freinage (32) et on ferme la soupape de séparation (52).

6. Procédé pour dégazer un système de freinage hydraulique de véhicule selon la revendication 5,
**caractérisé en ce qu'**
après avoir été vidé une première fois on remplit l'accumulateur hydraulique (18) à nouveau par la pompe hydraulique (14) et finalement on le vide de nouveau.

7. Procédé pour dégazer un système de freinage hydraulique de véhicule selon la revendication 1,
**caractérisé en ce que**
le dégazage est réalisé lorsque le véhicule est à l'arrêt.
